# EUROPÄISCHE PATENTSCHRIFT

(11) **EP 0 716 110 B1**
(45) Veröffentlichungstag und Bekanntmachung des Hinweises auf die Patenterteilung: **09.06.1999**
(21) Anmeldenummer: 95118446.4
(22) Anmeldetag: 23.11.1995
(51) Int. Cl.: C08G 18/66

(54) **Unter Druck stehende, Treibmittel enthaltende Isocyanat-Semiprepolymermischungen auf Basis von Mischungen aus Polyhydroxylverbindungen und Monoalkoholen und/oder Hydroxyketonen, ihre Verwendung zur Herstellung von Polyurethan-Schaumstoffen und ein Verfahren hierfür**
Pressurized isocyanate semiprepolymer mixtures containing propellant, based on mixtures of polyhydroxy compounds and monoalcohols and/or hydroxyketones, their use for the preparation of polyurethane foams and a process therefore
Mélange d'isocyanate semi-prépolymères contenant un gaz propulseur sous pression, à base de mélanges de composés polyhydroxylés et monoalcohols et/ou hydroxycétones, leur utilisation pour préparer des mousses de polyuréthane et leur procédé de préparation

(30) Priorität: 06.12.1994 DE 4443432
(43) Veröffentlichungstag der Anmeldung: 12.06.1996
(73) Patentinhaber: Elastogran GmbH, D-49440 Lemförde (DE)
(72) Erfinder: Reese, Hans-Jürgen, D-01987 Schwarzheide (DE); Heimpel, Franz, D-86444 Affing (DE); Forster, Heinz, D-82515 Wolfratshausen (DE)
(74) Vertreter: Karau, Wolfgang, Dr.

(56) Entgegenhaltungen:
- DE-A- 2 842 242
- FR-A- 2 396 035

## Beschreibung

Gegenstand der Erfindung sind unter Druck stehende, Treibmittel enthaltende Isocyanat-Semiprepolymermischungen mit vorteilhafterweise einem Isocyanatgehalt von 5 bis 25 Gew.-%, die erhältlich sind durch Umsetzung von mindestens einer Polyhydroxylverbindung (A) in Verbindung mit einem linearen, verzweigtkettigen oder cyclischen, gesättigten oder olefinisch ungesättigten Monoalkohol mit 1 bis 25 Kohlenstoffatomen (A1i) und/oder einem Hydroxyketon (A1ii) mit organischen Polyisocyanaten (B) in einem Reaktionsgefäß in Gegenwart mindestens eines Treibmittels oder anschließendem Beaufschlagen der treibmittelfrei hergestellten Isocyanat-Semiprepolymeren mit mindestens einem Treibmittel. Andere Gegenstände betreffen die Verwendung der unter Druck stehenden, Treibmittel enthaltenden Isocyanat-Semiprepolymermischungen zur Herstellung von sogenannten Einkomponenten-Polyurethan-Schaumstoffen - im folgenden wird Polyurethan abgekürzt auch PU genannt - und ein Verfahren zur Herstellung von formstabilen PU-Schaumstoffen durch Entspannen lassen der unter Druck stehenden Isocyanat-Semiprepolymermischungen, ihre Umsetzung mit der Atmosphäre, vorzugsweise Luftfeuchtigkeit, und Aushärtung. Derartige Einkomponenten-PU-Schaumstoffe finden hauptsächlich Verwendung im Bereich des Bauwesens und umfaßt z.B. das Ausfüllen von bautechnisch bedingten Hohlräumen und die Fixierung von Fenstern und Türen in Gebäuden.

Einkomponenten-Mischungen zur Herstellung von PU-Schaumstoffen, ihre Aufbaukomponenten und Zusatzstoffe sind bekannt. Zu ihrer Herstellung können beispielsweise Polyhydroxylverbindungen in Gegenwart oder Abwesenheit von z.B. Katalysatoren, Stabilisatoren, Treibmitteln und gegebenenfalls weiteren Zusatzstoffen mit einem stöchiometrischen Überschuß an organischen Polyisocyanaten zu einem Isocyanat-Semiprepolymeren umgesetzt werden.

Unter Druck stehende, Treibmittel enthaltende Isocyanat-Semiprepolymermischungen werden üblicherweise nach folgenden Methoden hergestellt.

Nach einer Verfahrensvariante werden die höhermolekularen Polyhydroxylverbindungen, Katalysatoren, Stabilisatoren und gegebenenfalls niedermolekularen hydroxylgruppenhaltigen Verbindungen sowie Zusatzstoffe wie z.B. Flammschutzmittel, Weichmacher, Farbstoffe und Pigmente gemischt und als Polyolkomponente mit der Polyisocyanatkomponente, die die organischen Polyisocyanate und gegebenenfalls gegen Isocyanatgruppen inerte Zusatzstoffe enthält, zur Reaktion gebracht. Hierzu können die Polyol- und Polyisocyanatkomponente über geeignete Dosieranlagen einzeln nacheinander oder gleichzeitig oder in Form einer fertigen Mischung aus einer geeigneten Mischvorrichtung in einen Druckbehälter, z.B. eine Aerosoldose, eingefüllt werden. Der gefüllte Druckbehälter wird anschließend mit einem Austragsventil versehen und zweckmäßigerweise über dieses mit einem oder mehreren Treibmitteln beaufschlagt. Falls erforderlich, können die Druckbehälter zum intensiven Mischen der Isocyanat-Semiprepolymeren und Treibmittel in einer Taumel- oder Schüttelanlage behandelt werden.

Nach einer anderen Verfahrensvariante können die Isocyanat-Semiprepolymeren in an sich bekannter Weise durch Umsetzung von in einem temperierbaren Rührbehälter vorgelegten organischen Polyisocyanaten mit den Polyhydroxylverbindungen hergestellt werden. Sofern die Isocyanat-Semiprepolymerherstellung in Abwesenheit von Katalysatoren, Stabilisatoren und gegebenenfalls anderen Zusatzstoffen durchgeführt wird, werden diese im Laufe der Prepolymerbildung oder danach der Reaktionsmischung einverleibt. Die erhaltene Isocyanat-Semiprepolymermischung wird, wie oben beschrieben, in einen Druckbehälter abgefüllt, dieser mit einem Austragsventil versehen, und mit dem Treibmittel oder einer Treibmittelmischung beaufschlagt.

Nach diesen Verfahrensvarianten aus Polyhydroxylverbindungen und überschüssigen Polyisocyanaten in Gegenwart von Katalysatoren und Stabilisatoren hergestellte Isocyanat-Semiprepolymermischungen müssen mit einem hohen Gehalt an unter Druck verflüssigten Treibmitteln, vorzugsweise Fluorchlorkohlenwasserstoffen (FCKW) oder/ und Fluorkohlenwasserstoffen (FKW), versetzt werden, um gut fließfähige und/oder in den erforderlichen Mengen aus dem Druckbehälter entspannbare schäumfähige Isocyanat-Semiprepolymermischungen zu erhalten.

Bedingt durch den Verzicht auf die die Ozonschicht gefährdenden FCKW und den Zwang zur Verwendung alternativer teuerer Treibmittel, wurde versucht durch geeignete Maßnahmen niedrigviskose Isocyanat-Prepolymere herzustellen.

So werden in der DE-A-40 25 843 lagerstabile Einkomponenten-Mischungen zur Herstellung von PU-Schaumstoffen beschrieben, die bei einer dynamischen Viskosität des Isocyanat-Prepolymeren von 200 bis 4000 mPa·s, Kohlendioxid als Treibmittel und zur Reduzierung der Viskosität Weichmacher enthalten. Nachteilig an derartigen Einkomponenten-Mischungen ist, daß die Weichmacher nicht in das Urethangerüst eingebaut werden und daher zum Auswandern neigen und einen Schrumpf des PU-Schaumstoffs bewirken. Nach Angaben der EP-A-0480 342 enthalten die Einkomponentenmischungen zur Herstellung von PU-Schaumstoffen als Treibmittel komprimierbare Gase wie Helium, Neon, Argon, Stickstoff, Sauerstoff, Kohlendioxid, Lachgas (N₂O) oder Luft. Ihre niedrige Viskosität von 500 bis 12000 mPa·s, vorzugsweise von kleiner als 10 000 mPa-s, gemessen bei 20°C, wird erzielt durch die Mitverwendung von viskositätsreduzierenden Lösungsmitteln wie z.B. Ethern, Estern und Ketonen, insbesondere Aceton oder Methylethylketon, die ihrerseits ein Erweichen des Polyurethanskeletts bewirken und dadurch einen erhöhten Schrumpf verursachen. Die Verwendung eines expandierenden PU-Klebstoffs zum Verbinden von Dämmstoffen mit Gebäudeteilen wird in der DE-A-33 17 193 (US-A-4 489 176) beschrieben. Die bei Feuchtigkeitszutritt unter Volumenausdehnung härtenden PU-Zubereitungen bestehen aus bis zu 80 Gew.-% eines PU-Prepolymeren, Schaumstabilisatoren und 10 bis 20 Gew.-% eines Verdünnungsmittels mit einem Siedepunkt von Raumtemperatur bis 60°C. Hochsiedende Weichmacher, wie z.B. Butylbenzylphthalat, Tris-(monochlorisopropyl)- oder Trichlorethylphosphat, in Verbindung mit teilhalogenierten Kohlenwasserstoffen, wie z.B. Dichlorfluormethan (R22) finden nach Angaben der DE-A-38 29 104 Verwendung zur Herstellung von Isocyanat-Prepolymermischungen, die durch Ausbringen aus einem Druckbehälter in flüssiger Form mit Feuchtigkeit zu PU-Schaumstoffen reagieren. Nachteilig an den letztgenannten Verfahren ist, daß durch die Mitverwendung der Verdünnungsmittel, Weichmacher, wie Diphenylkresylphosphat oder Dioctylphthalat, oder hochsiedenden Weichmacher die Schrumpfneigung der erhaltenen PU-Schaumstoffe begünstigt und vielfach verstärkt wird.

Die EP-A-0 002 768 (US-A-4 258 140) beschreibt ein Verfahren zur Herstellung von formstabilen Einkomponenten-PU-Schaumstoffen durch Entspannen und Aushärten lassen mit Luftfeuchtigkeit eines unter Druck stehenden Isocyanat-Semiprepolymergemisches auf Basis von tertiäre Aminogruppen in der Polymerkette gebunden enthaltenden di- bis octafunktionellen Polyester- und/oder Polyetherpolyolen mit einer Hydroxylzahl von 40 bis 500 und organischen Polyisocyanaten, wie z.B. Mischungen aus Diphenylmethan-diisocyanat-Isomeren (MDI) und Polyphenyl-polymethylen-polyisocyanaten - abgekürzt Roh-MDI genannt. Nach Angaben der DE-A-28 42 242 (US-A-4 263 412) können zur Herstellung von formstabilen Einkomponenten-PU-Schaumstoffen verwendbare Isocyanat-Semiprepolymermischungen mit einem relativ geringen Gehalt an Treibmitteln in den Innenbehälter einer Zweikammer-Druckpackung, die ein Druckmedium im Außenbehälter enthält, eingebracht und bei Bedarf über eine Entnahmevorrichtung entnommen werden.

Üblicherweise werden zur Herstellung von Polyisocyanatpolyadditionsprodukten als mit NCO-Gruppen reaktive Verbindungen synthetische Polyhydroxylverbindungen, vorzugsweise Polyester-polyole und Polyoxyalkylen-polyole, verwendet. Aus ökologischer Sicht scheint es jedoch zweckmäßig, die synthetisch hergestellten Polyhydroxylverbindungen ganz oder zumindest teilweise durch hydroxylgruppenhaltige Naturstoffe zu substituieren. Die Verwendung von nachwachsenden hydroxylgruppenhaltigen Naturstoffen bedarf keiner aufwendigen technischen Synthesen. Vorteilhaft ist ferner, daß in anderen Bereichen als Abfallprodukte anfallende Naturstoffe, gegebenenfalls nach einer geringfügigen technischen Behandlung und/oder Reinigung einer technischen Verwertung zugeführt werden können. Durch die Verwendung neuartiger Ausgangsstoffe können Polyisocyanatpolyadditionsprodukte mit unterschiedlichen mechanischen Eigenschaften hergestellt werden, die ihrerseits neue Verwendungsmöglichkeiten erschließen. Klassische Naturstoffe, die in der Polyurethanchemie bereits als Ausgangs; stoffe verwendet werden, sind z.B. natürliche Öle, wie Tallöl und Rizinusöl, mehrwertige Alkohole, wie Glycerin und die Zuckeralkohole und Fettsäuren. Ein bedeutender Abfallstoff ist auch das Lignin, das als Nebenprodukt der Zellstoffgewinnung aus Holz zwangsweise anfällt.

Die Aufgabe der vorliegenden Erfindung bestand darin, leicht verarbeitbare, niedrigviskose Isocyanat-Semiprepolymere unter Verwendung von z.B. speziell zusammengesetzten Mischungen aus Polyhydroxylverbindungen, hydroxylgruppenhaltigen Naturstoffen oder aus diesen gefertigten Polyhydroxylverbindungen zu entwickeln, die, mit einem geringen Gehalt an Treibmitteln versehen, zu Einkomponenten-PU-Schaumstoffen umgesetzt werden können. Die erhaltenen PU-Schaumstoffe sollten dimensionsstabil sein, d.h. im wesentlichen keinen Schrumpf zeigen.

Diese Aufgabe konnte überraschenderweise gelöst werden durch die Verwendung einer Mischung aus mindestens einer Polyhydroxylverbindung (A) z.B. einem konventionellen Polyoxyalkylenpolyol (A3) und/oder vorzugsweise einem hydroxylgruppenhaltigen Polyester (A2) und einem Monoalkohol (A1i) oder/und Hydroxyketon (A1ii) mit einem Gewichtsverhältnis von (A):(A1i) und/oder (A1ii) von 20:1 bis 1,0:1 zur Herstellung der Isocyanat-Semiprepolymermischung.

Gegenstand der Erfindung sind somit unter Druck stehende, Treibmittel enthaltende Isocyanat-Semiprepolymermischungen, die erhältlich sind durch Umsetzung
A) mindestens einer Polyhydroxylverbindung mit
B) mindestens einem organischen Polyisocyanat
   in einem Reaktionsgefäß in Gegenwart mindestens eines Treibmittels oder durch Beaufschlagen der treibmittelfrei gebildeten Isocyanat-Semiprepolymeren mit mindestens einem Treibmittel und dadurch gekennzeichnet sind, daß die Polyhydroxylverbindungen (A) in Verbindung mit einem linearen, verzweigtkettigen oder cyclischen, gesättigten oder olefinisch ungesättigten Monoalkohol mit 1 bis 25 Kohlenstoffatomen (A1i) oder einem Hydroxyketon (A1ii) oder Mischungen davon in einem Gewichtsverhältnis von (A):(A1i) und/oder (A1ii) von 20:1 bis 1,0:1 verwendet werden.

Die unter Druck stehenden, Treibmittel enthaltenden Isocyanat-Semiprepolymermischungen werden vorzugsweise hergestellt durch Umsetzung der Polyhydroxylverbindungen (A) in Verbindung mit den erfindungswesentlichen Monoalkoholen (A1i) und/oder Hydroxyketonen (A1ii) und organischen Polyisocyanate (B) in Gegenwart von
C) Katalysatoren,
D) oberflächenaktiven Substanzen sowie
E) gegebenenfalls weiteren Zusatzstoffen.

Andere Gegenstände der Erfindung sind nach Anspruch 11 die Verwendung der in einem Druckbehälter unter Druck stehenden, Treibmittel enthaltenden Isocyanat-Semiprepolymermischungen zur Herstellung von Einkomponenten-PU-Schaumstoffen durch Entspannen des Druckbehälterinhalts und nach Anspruch 12 ein Verfahren zur Herstellung von formstabilen PU-Schaumstoffen durch Entspannen und Aushärten lassen mit der Atmosphäre, vorzugsweise Luftfeuchtigkeit, einer lagerstabilen, unter Druck stehenden, Treibmittel enthaltenden Isocyanat-Semiprepolymermischung auf Basis von Polyhydroxylverbindungen (A) und organischen Polyisocyanaten (B), das dadurch gekennzeichnet ist, daß zur Herstellung der Isocyanat-Semiprepolymeren die Polyhydroxylverbindungen (A) in Verbindung mit einem linearen, verzweigtkettigen oder cyclischen, gesättigten oder olefinisch ungesättigten Monoalkohol mit 1 bis 25 Kohlenstoffatomen (A1i) oder einem Hydroxyketon (A1ii) oder Mischungen davon in einem Gewichtsverhältnis von (A):(A1i) und/oder (A1ii) von 20:1 bis 1,0:1 verwendet werden.

Durch die Verwendung der Polyhydroxylverbindungen (A), die vorzugsweise ein Molekulargewicht von mindestens 300 besitzen, in Verbindung mit den monofunktionellen Alkoholen (A1i) und/oder Hydroxyketonen (A1ii) können durch Umsetzung mit einer überschüssigen Menge der organischen Polyisocyanate Isocyanat-Semiprepolymere mit einer engen Molekulargewichtsverteilung in einem gewünschten Molekulargewichtsbereich hergestellt werden. Durch den Einsatz von poly- und monofunktionellen Hydroxylverbindungen kann der Molekulargewichtsaufbau und Abbruch der Polyisocyanat-polyadditionsreaktion gezielt gesteuert und damit die Viskosität und Fließfähigkeit des Isocyanat-Semiprepolymeren beeinflußt werden. Aber nicht nur durch die chemische Struktur und Zusammensetzung der Polyhydroxylverbindungen (A), sondern auch durch die Art, Zusammensetzung und Menge der organischen Polyisocyanate (B) können die physikalischen und chemischen Eigenschaften wie z.B. Lagerbeständigkeit, Reaktivität u.a., der Isocyanat-Semiprepolymeren und die mechanischen Eigenschaften der daraus hergestellten PU-Schaumstoffe modifiziert und den Verarbeitungs- und Verwendungsbedingungen angepaßt werden. Durch die bevorzugte Verwendung von hydroxylgruppenhaltigen Polyestern mit einem Molekulargewicht von mindestens 300 wird z.B. ein ausreichender Molekulargewichtsaufbau gewährleistet und zusätzlich einer möglichen Versprödung des hergestellten PU-Schaumstoffs, insbesondere eines PU-Hartschaumstoffs, entgegengewirkt. Die erfindungsgemäß hergestellten Isocyanat-Semiprepolymeren sind relativ niedrigviskos, gut fließfähig und leicht zu vorzugsweise PU-Hartschaumstoffen verarbeitbar.

Vorteilhaft ist ferner, daß die Isocyanat-Semiprepolymermischung mit einer deutlich reduzierten Treibmittelmenge nahezu vollständig aus dem Druckbehälter hinausgedrückt werden kann.

Die zur Herstellung der unter Druck stehenden, Treibmittel enthaltenden Isocyanat-Semiprepolymermischungen verwendbaren Isocyanat-Semiprepolymere besitzen zweckmäßigerweise einen NCO-Gehalt von 5 bis 25 Gew.-%, vorzugsweise 8 bis 20 Gew.-% und insbesondere 9 bis 13 Gew.-%, bezogen auf das Gewicht der Isocyanat-Semiprepolymeren, und werden, wie bereits dargelegt wurde, hergestellt durch Umsetzung mindestens einer Polyhydroxylverbindung (A) mit einem Molekulargewicht von vorzugsweise mindestens 300, vorzugsweise mindestens einem hydroxylgruppenhaltigen Polyester mit einem Molekulargewicht von mindestens 300 (A2) oder insbesondere einer Mischung aus mindestens einem hydroxylgruppenhaltigen Polyester (A2) und mindestens einem Polyoxyalkylenpolyol (A3) mit einer Funktionalität von 2 bis 8 und einem Molekulargewicht von vorzugsweise mindestens 300 in Verbindung mit den erfindungswesentlichen linearen, verzweigtkettigen oder cyclischen, gesättigten oder olefinisch ungesättigten Monoalkoholen (A1i) und/oder Hydroxyketonen (A1ii) mit mindestens einem organischen Polyisocyanat, vorzugsweise einer Polyisocyanatmischung, beispielsweise mindestens einem aliphatischen, cycloaliphatischen und/oder vorzugsweise aromatischen Polyisocyanat, in Abwesenheit oder vorzugsweise in Gegenwart von Katalysatoren (C) und oberflächenaktiven Substanzen (D). Die Isocyanat-Semiprepolymerherstellung kann ferner in Abwesenheit oder Gegenwart von Treibmitteln (E) und weiteren Zusatzstoffen (F) durchgeführt werden, wobei nach einer bevorzugten Ausführungsform die Isocyanat-Semiprepolymerherstellung in Abwesenheit von Treibmitteln (E) durchgeführt wird, da diese zweckmäßigerweise danach dem gebildeten Isocyanat-Semiprepolymeren einverleibt werden.
A) Als Polyhydroxylverbindungen (A) zur Herstellung der Isocyanat-Semiprepolymeren finden vorzugsweise hydroxylgruppenhaltige Polyester mit einem Molekulargewicht von vorzugsweise mindestens 300, z.B. von 300 bis 6000 Verwendung, die ausgewählt werden können aus den zur Herstellung von PU-Schaumstoffen bekannten Polyester-polyolen und vorzugsweise ausgewählt werden aus der Gruppe der Polyester-polyole, hergestellt durch Polykondensation von Dicarbonsäuren und/oder Dicarbonsäurederivaten, z.B. Dicarbonsäure-mono- und/oder -dialkylestern und/oder -anhydriden und vorzugsweise zwei- und/oder dreiwertigen Alkoholen,
   der natürlichen Öle,
   der modifizierten natürlichen Öle, hergestellt durch Addition von ein- und/oder mehrwertigen Alkoholen an epoxidierte natürliche Öle und der dimeren Fettsäureester.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und/oder Fettsäuren mit 12 bis 26 Kohlenstoffatomen, vorzugsweise 14 bis 18 Kohlenstoffatomen und mehrwertigen Alkoholen, vorzugsweise Alkandiolen mit 2 bis 12 Kohlenstoffatomen, vorzugsweise 2 bis 6 Kohlenstoffatomen, Dialkylenglykolen und/oder Alkantriolen mit 3 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Als Fettsäuren seien z.B. genannt: Laurin-, Myristin-, Palmitin- und Stearinsäure. Die Mono- und Dicarbonsäuren können dabei sowohl einzeln als auch im Gemisch untereinander verwendet werden. Anstelle der freien Mono- und Dicarbonsäuren können auch die entsprechenden Carbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol, Glycerin oder Mischungen aus mindestens zwei der genannten Alkandiole, insbesondere z.B. Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Monocarbonsäuren, Polycarbonsäuren und/oder -derivate und mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschlie-ßend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und ein Molekulargewicht von 300 bis 6000, vorzugsweise 300 bis 3000
   Als natürliche Öle seien beispielsweise nachwachsende Rohstoffe wie z.B. Rizinusöl, Sojaöl, Rüböl, Tallöl, Rapsöl und Leinöl genannt.
   Als modifizierte natürliche Öle kommen z.B. Alkoxylierungsprodukte von natürlichen Ölen, Verkochungsprodukte aus Keton-Formaldehydharzen mit hydroxylfunktionellen Naturstoffen, z.B. natürlichen Ölen und vorzugsweise hydroxylierte Fettsäureverbindungen, hergestellt durch Addition von ein- und/oder mehrwertigen Alkoholen an epoxidierte natürliche Öle, wie z.B. epoxidiertes Sojaöl, epoxidierten Rübölfettsäure-2-ethylhexylester oder epoxidiertes Sonnenblumenölfettsäure-diamid in Betracht. Hydroxylierte Fettsäureverbindungen der beispielhaft genannten Art werden z.B. beschrieben in der DE-A-32 46 612, (US-A-4 886 893), EP-A-0 554 590, EP-A-0 600 958 und DE-C-41 25 031.
   Geeignete dimere Fettsäureester werden beispielsweise in den Patentpublikationen GB-A-879 517, GB-A-1 458 069, US-A-3 349 049, US-A-4 423 179 und EP-B-0 156 665 (US-A-4 602 079) beschrieben. Die hydroxylgruppenhaltigen Polyester können einzeln oder in Form von Mischungen verwendet werden.
   Als Polyhydroxylverbindungen verwendet werden können ferner Polyoxyalkylen-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 3 reaktive Wasserstoffatome gebunden enthält zur Herstellung von Polyoxyalkylen-polyolen für flexible PU-Schaumstoffe und vorzugsweise 3 bis 8 reaktive Wasserstoffatome gebunden enthält zur Herstellung von Polyoxyalkylen-polyolen für halbharte und harte PU-Schaumstoffe, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- bis achtwertige Alkohole und/oder Alkylenglykole wie z.B. Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Sucrose sowie Mischungen aus mindestens 2 mehrwertigen Alkoholen.
   Die Polyoxyalkylen-polyole, vorzugsweise Polyoxypropylen- und Polyoxypropylen-polyoxyethylen-polyole, besitzen eine Funktionalität von 2 bis 8 und Molekulargewichte von 300 bis 8500, vorzugsweise von 600 bis 7200, wobei, wie bereits dargelegt wurde, für Isocyanat-Semiprepolymere für flexible PU-Schaumstoffe, Polyoxyalkylen-polyole mit einer Funktionalität von 2 bis 3 und einem Molekulargewicht von 2800 bis 6500 und für halbharte und harte PU-Schaumstoffe, Polyoxyalkylen-polyole mit einer Funktionalität von 3 bis 8 und einem Molekulargewicht von 600 bis 3900 bevorzugt verwendet werden, und geeignete Polyoxytetramethylen-glykole ein Molekulargewicht von 300 bis ungefähr 3500 aufweisen.
   Als Polyoxyalkylen-polyole bewährt haben sich auch alkoxylierte Lignine mit Molekulargewichten von beispielsweise 1200 bis 5200, vorzugsweise von 1500 bis 3000 die zweckmäßigerweise aus mit Lignin gestarteten Polyoxypropylenpolyolen bestehen, oder Mischungen aus derartigen alkoxylierten Ligninen. Geeignet sind jedoch beispielsweise auch mit Lignin gestartete Polyoxypropylen-polyoxyethylen-polyole und mit Lignin gestartete Polyoxyethylen-polyole sowie Mischungen aus mindestens 2 der beispielhaft genannten ligninhaltigen Polyoxyalkylen-polyole. Geeignete ligninhaltige Polyoxyalkylen-polyole können beispielsweise hergestellt werden analog den Angaben der US-A-3 546 199 und US-A-3 654 194, die als Bestandteil der Patentbeschreibung anzusehen sind.
   Die Lignin-polyoxyalkylen-polyole werden vorteilhafterweise mit ligninfreien Polyoxyalkylen-polyolen oder hydroxylgruppenhaltigen Polyester (A2) gemischt, so daß die Mischung aus Polyhydroxylverbindungen (A) z.B. 5 bis 65 Gew.-% vorzugsweise 8 bis 20 Gew.-%, bezogen auf das Gesamtgewicht, Ligninpolyoxyalkylen-polyole enthalten.
   Als Polyoxyalkylen-polyole eignen sich ferner polymermodifizierte Polyoxyalkylen-polyole, vorzugsweise Pfropf-polyoxyalkylen-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyoxyalkylen-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyoxyalkylen-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyoxyalkylen-polyole (A3) können ebenso wie die hydroxylgruppenhaltigen Polyester (A2) einzeln oder in Form von Mischungen verwendet werden. Ferner können sie mit den hydroxylgruppenhaltigen Polyestern oder Pfropf-polyoxyalkylen-polyolen sowie den hydroxylgruppenhaltigen Polyesteramiden, Polyacetalen und/oder Polycarbonaten gemischt werden.
   Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Die Polyhydroxylverbindungen (A) können je nach Verwendungszweck der Isocyanat-Semiprepolymermischungen ganz oder vorzugsweise teilweise durch niedermolekulare Kettenverlängerungs- und/oder Vernetzungsmittel ersetzt werden. Bei der Herstellung von Isocyanat-Semiprepolymeren für flexible PU-Schaumstoffe kann sich zur Modifizierung der mechanischen Eigenschaften der PU-Schaumstoffe, z.B. der Härte, der Zusatz von Kettenverlängerungsmitteln, Vernetzungsmitteln oder gegebenenfalls auch Gemischen davon als vorteilhaft erweisen. Bei der Herstellung von Isocyanat-Semiprepolymeren für PU-Hartschaumstoffe kann üblicherweise auf die Verwendung von Kettenverlängerungs- und/oder Vernetzungsmittel verzichtet werden. Als Kettenverlängerungsmittel können difunktionelle Verbindungen, als Vernetzungsmittel tri- und höherfunktionelle Verbindungen jeweils mit Molekulargewichten kleiner als 300, vorzugsweise von 62 bis ungefähr 300 verwendet werden. Als Kettenverlängerungsmittel beispielhaft genannt seien Alkandiole, z.B. solche mit 2 bis 6 Kohlenstoffatomen im Alkylenrest, wie z.B. Ethan-, 1,3-Propan-, 1,4-Butan-, 1,5-Pentan- und 1,6-Hexandiol, und Dialkylenglykole, wie z.B. Diethylen-, Dipropylen- und Dibutylenglykol und als Vernetzungsmittel Alkanolamine, z.B. Ethanolamin, Dialkanolamin, z.B. Diethanolamin, und Trialkanolamine z.B. Triethanolamin und Triisopropanolamin und drei- und/oder höherwertige Alkohole, wie z.B. Glycerin, Trimethylolpropan und Pentaerythrit. Als Kettenverlängerungs- oder Vernetzungsmittel eignen sich ferner die niedermolekularen Ethoxylierungs- und/oder Propoxylierungsprodukte, z.B. solche mit Molekulargewichten kleiner als 300, der vorgenannten mehrwertigen Alkohole, Alkylenglykole, Alkanolamine sowie von aliphatischen und/oder aromatischen Diaminen.
   Als Kettenverlängerungsmittel vorzugsweise eingesetzt werden Alkandiole, insbesonders Butandiol-1,4 und/oder Hexandiol-1,6, Alkylenglykole, insbesonders Ethylenglykol und Propylenglykol und als Vernetzungsmittel dreiwertige Alkohole, insbesonders Glycerin und Trimethylolpropan, Dialkanolamine, insbesonders Diethanolamin und Trialkanolamine, insbesonders Triethanolamin.
   Die Kettenverlängerungs- und/oder Vernetzungsmittel, die vorzugsweise zur Herstellung von Isocyanat-Semiprepolymeren für flexible PU-Schaumstoffe mitverwendet werden, können beispielsweise in Mengen von 2 bis 60 Gew.-%, vorzugsweise von 10 bis 40 Gew.-%, bezogen auf das Gesamtgewicht der Polyhydroxylverbindungen (A) eingesetzt werden.
   Die Polyhydroxylverbindungen (A) werden erfindungsgemäß in Verbindung mit verzweigtkettigen, cyclischen oder vorzugsweise linearen, olefinisch ungesättigten oder vorzugsweise gesättigten Monoalkoholen mit 1 bis 25 Kohlenstoffatomen (A1i), vorzugsweise 12 bis 20 Kohlenstoffatomen, oder Hydroxyketonen (A1ii), vorzugsweise β-Hydroxyketonen, oder Mischungen aus den genannten Monoalkoholen (A1i), insbesondere linearen, gesättigten Monoalkoholen, und Hydroxyketonen (A1ii) verwendet. Zur Herstellung der Mischungen aus den Polyhydroxylverbindungen (A), z.B. aus den hydroxylgruppenhaltigen Polyestern (A2) oder Polyoxyalkylen-polyolen (A3) oder vorzugsweise Mischungen aus (A2) und (A3), und den erfindungswesentlichen Monoalkoholen (A1i) und/oder Hydroxyketonen (A1ii) werden diese im Gewichtsverhältnis [(A) ohne (A1)]: (A1i) und/oder (A1ii) gleich 20:1 bis 1,0:1, vorzugsweise 15 : 1 bis 1,5 : 1 und insbesondere 10 : 1 bis 1,5 : 1 verwendet.
   Als Monoalkohole (A1i) mit 1 bis 25 Kohlenstoffatomen, vorzugsweise 12 bis 20 Kohlenstoffatomen eignen sich beispielsweise lineare oder verzweigtkettige, gesättigte einwertige Alkohole, wie z.B. Methanol, Ethanol, n- und iso-Propanol, Butanole, Pentanole, Hexanole, n-Octanole, Octanol-2, Decyl-, Dodecyl-, Myristyl-, Cetyl- und Stearylalkohol, lineare oder verzweigtkettige, olefinisch ungesättigte einwertige Alkohole, wie z.B. Allylalkohol, Buten(2)-ol-1, Buten(3)-ol-1 und Zimtalkohol und cyclische, gesättigte oder olefinisch ungesättigte einwertige Alkohole, wie z.B. Cyclopentanol, Cyclopentenol, Cyclohexanol, Cyclohexenol und Cycloheptanol. Die Monoalkohole können in technischer oder vorzugsweise reiner Form, einzeln oder als Mischungen aus mindestens zwei Monoalkoholen eingesetzt werden. Vorzugsweise Verwendung finden Dodecyl- und Stearylalkohol.
   Als Hydroxyketone (A1ii) eignen sich beispielsweise die in einem basischen Reaktionsmedium erhältlichen Ketondimerisierungsprodukte, wie z.B. das durch Dimerisierung von Aceton erhältliche 4-Methyl-4-hydroxy-pentan-2-on und die über aldolanaloge Reaktionen aus Ketonen und Aldehyden erhältlichen β-Hydroxyketone der Formel 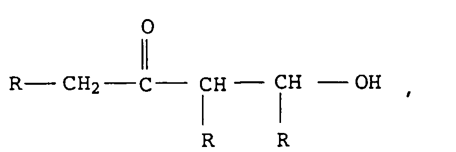 in der R gleich oder verschieden ist, und ein Wasserstoffatom, einen Phenylrest, einen Alkylrest mit 1 bis 20 Kohlenstoffatomen, vorzugsweise 1 bis 12 Kohlenstoffatomen, einen Phenylalkylrest mit 1 bis 14 Kohlenstoffatomen, vorzugsweise 1 bis 10 Kohlenstoffatomen im Alkylrest oder ein Halogenatom, vorzugsweise ein Chlor- und/oder Bromatom bedeutet. Als β-Hydroxyketone seien beispielhaft genannt: 4-Hydroxypentan-2-on und vorzugsweise 4-Methyl-4-hydroxy-pentan-2-on, Hydroxyaceton und Acetylmethylkarbinol.
   Die Hydroxyketone (A1ii), vorzugsweise β-Hydroxyketone, können analog den Monoalkoholen (A1i) einzeln oder in Form von Mischungen verwendet werden.
B) Zur Herstellung der Isocyanat-Semiprepolymeren können, wie bereits ausgeführt wurde, als organische Polyisocyanate, beispielsweise aliphatische, cycloaliphatische und vorzugsweise aromatische Polyisocyanate verwendet werden.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, 2-Ethyl-2-butyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,4'- und 2,2'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Als organische Polyisocyanate vorzüglich bewährt haben sich Mischungen aus Diphenylmethan-diisocyanaten und Polyphenylpolymethylen-polyisocyanaten, vorzugsweise solche mit einem Diphenylmethan-diisocyanatgehalt von mindestens 45 Gew.-%, z.B. von 45 bis 95 Gew.-% und insbesondere von 48 bis 60 Gew.-%, so daß derartige Roh-MDI-Zusammensetzungen insbesondere bevorzugt Anwendung finden.
C) Die erfindungsgemäß verwendbaren Isocyanat-Semiprepolymeren können in Abwesenheit und vorzugsweise in Gegenwart von Katalysatoren hergestellt werden, wobei man als Katalysatoren (C) vorzugsweise Verbindungen verwendet, die die Reaktion der Hydroxylgruppen enthaltenden Verbindungen (A) mit den organischen Polyisocyanaten (B) stark beschleunigen. Als Katalysatoren in Betracht kommen z.B. organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat, Dioctylzinn-diacetat und Dibutylzinndimercaptid und stark basische Amine, beispielsweise Amidine, wie z.B. 2,3-Dimethyl-3,4,5,6-tetrahydropyrimidin, tertiäre Amine, wie z.B. Triethylamin, Tributylamin, Dimethylbenzylamin, N-Methyl-, N-Ethyl-, N-Cyclohexylmorpholin, Dimorpholin-diethylether, N,N,N',N'-Tetramethylethylendiamin, N,N,N',N'-Tetramethyl-butandiamin, N,N,N',N'-Tetramethyl-hexandiamin-1,6, Di-(4-dimethylaminocyclohexyl)-methan, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan Alkanolaminverbindungen, wie Triethanolamin, Triisopropanolamin, N-Methyl- und N-Ethyl-diethanolamin und Dimethylethanolamin, Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid und vorzugsweise 1,4-Diaza-bicyclo-(2,2,2)-octan. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindung (A).
   Die Herstellung der erfindungsgemäß verwendbaren Isocyanat-Semiprepolymeren kann ferner in Abwesenheit oder Gegenwart von oberflächenaktiven Substanzen (D), Treibmitteln (E) und weiteren Zusatzstoffen (F) durchgeführt werden. Nach einer bevorzugt angewandten Herstellungsvariante werden diese Aufbaukomponenten (D) bis (F) jedoch zweckmäßigerweise den vorab in einem eigenen Verfahrensschritt hergestellten Isocyanat-Semiprepolymeren einverleibt.
D) Als oberflächenaktive Substanzen (D) kommen z.B. Verbindungen in Betracht, welche zur Unterstützung der Homogenisierung der Isocyanat-Semiprepolymermischungen dienen und gegebenenfalls auch geeignet sind, die Zellstruktur der PU-Schaumstoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie pyrogene Kieselsäure, Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (A), angewandt.
E) Als Treibmittel (E) geeignet sind bei Raumtemperatur in flüssiger Form vorliegende Gase und Flüssigkeiten, welche gegenüber den flüssigen Isocyanat-Semiprepolymeren inert sind und Siedepunkte unter 50°C, insbesondere zwischen -50°C und 30°C bei Atmosphärendruck aufweisen sowie Mischungen aus gasförmigen und flüssigen Treibmitteln. Beispiele derartiger, vorzugsweise verwendbarer Gase und Flüssigkeiten sind Alkane, wie z.B. Propan, n- und iso-Butan, n- und iso-Pentan, vorzugsweise technische Gemische aus n- und iso-Pentan, und Cyclopentan, Alkylether, wie z.B. Dimethylether, Diethylether und Methylisobutylether, Carbonsäurealkylester, wie z.B. Methylformiat und halogenierte Kohlenwasserstoffe wie z.B. Dichlorfluormethan, Trifluormethan, 1,1-Dichlor-1-fluorethan, Monochlortrifluorethan, Monochlordifluorethan, Difluorethan, Dichlortrifluorethan, Monochlortetrafluorethan, Pentafluorethan, Tetrafluorethan und Dichlormonofluorethan.
   Als Treibmittel verwendbar sind ferner gegebenenfalls substituierte Monocarbonsäuren mit 1 bis 30 Kohlenstoffatomen, vorzugsweise aliphatische Monocarbonsäuren mit 1 bis 10 Kohlenstoffatomen. Als derartige Treibmittel beispielhaft genannt seien gegebenenfalls substituierte Monocarbonsäuren, wie z.B. Ameisen-, 2-Chlorpropion-, 3-Chlorpropion-, 2,2-Dichlorpropion-, Hexan-, Cyclohexan-, Dodecan-, Palmitin-, Stearin-, Öl-, Glycol-, Ricinol-, Tallölfettsäure und vorzugsweise Propionsäure, 2-Ethylhexansäure und insbesondere Essigsäure. Die organischen Carbonsäuren, die mit den Isocyanaten unter Bildung von Harnstoffen, Acylharnstoffen und Kohlendioxid reagieren, werden zweckmäßigerweise in Kombination mit Alkali- oder Ammoniumsalzen von organischen Carbonsäuren oder Tris(dialkylaminoalkyl)-s-hexahydrotriazinen als Katalysatoren verwendet. Durch die Bildung von Kohlendioxid kann das Druckpolster aus Treibmittel im Druckgefäß auf vorteilhafte Weise vergrößert und durch die Bildung von Harnstoffgruppen können die mechanischen Eigenschaften des PU-Schaumstoffs modifiziert werden.
   Die beispielhaft genannten Treibmittel können einzeln oder als Mischungen verwendet werden. Als Treibmittel nicht verwendet werden Fluorchlorkohlenwasserstoffe, die die Ozonschicht schädigen.
   Im Gemisch mit Gasen und/oder Flüssigkeiten mit Siedepunkten unter 50°C verwendet werden können auch (Cyclo)alkane, wie z.B. Hexan und Cyclohexan und Carbonsäurealkylester, wie z.B. Ethylformiat, mit Siedepunkten über 50°C, sofern die Treibmittelmischung zweckmäßigerweise einen Siedepunkt unter 38°C aufweist und eine Treibwirkung besitzt, die ausreichend ist, um die unter Druck stehende Isocyanat-Semiprepolymermischung aus dem Druckbehälter hinauszudrücken und zu einem PU-Schaumstoff aufzuschäumen. Als Treibmittel vorzugsweise verwendet werden Mischungen aus Alkanen, insbesondere Butan und/oder Propan, und einer Flüssigkeit mit einem Siedepunkt unter 50°C. Die erforderliche Menge an Treibmittel oder -mischung kann in Abhängigkeit von der Art des Treibmittels oder der Treibmittelmischung sowie den Mischungsverhältnissen in einfacher Weise experimentell ermittelt werden. Üblicherweise werden die Treibmittel in einer Menge von 10 bis 40 Gew.-%, vorzugsweise von 13 bis 30 Gew.-%, bezogen auf das Gewicht der Isocyanat-Semiprepolymeren, verwendet. Die Treibmittel liegen in der unter Druck stehenden Isocyanat-Sempiprepolymermischung praktisch vollständig in flüssiger Form vor.
F) Anstelle der oberflächenaktiven Substanzen (D) oder vorzugsweise zusätzlich zu diesen können den Isocyanat-Semiprepolymeren weitere Zusatzstoffe (F) einverleibt werden. Beispielhaft genannt seien Flammschutzmittel, Weichmacher, Füllstoffe, Farbstoffe, Pigmente, Hydrolyseschutzmittel und fungistatisch und/oder bakteriostatisch wirkende Substanzen.
   Geeignete Flammschutzmittel sind beispielsweise Diphenylkresylphosphat, Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.
   Außer den genannten halogensubstituierten Phosphaten können auch anorganische Flammschutzmittel, wie z.B. Aluminiumoxidhydrat, Antimontrioxid, Arsenoxid, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosphaten und Melamin und/oder Blähgraphit sowie gegebenenfalls Stärke zum Flammwidrigmachen der aus Isocyanat-Semiprepolymermischungen hergestellten PU-Schaumstoffe verwendet werden. Im allgemeinen hat es sich als zweckmäßig erwiesen, 5 bis 50 Gew.-Teile, vorzugsweise 10 bis 40 Gew.-Teile der genannten Flammschutzmittel oder -mischungen bezogen auf jeweils 100 Gew.-Teile der Polyhydroxylverbindungen zu verwenden.
   Es kann auch vorteilhaft sein, der Isocyanat-Semiprepolymermischung Weichmacher einzuverleiben, um die Neigung zur Sprödigkeit der hergestellten PU-Schaumstoffe zu verringern. Verwendbar sind beispielsweise die an sich bekannten weichmachend wirkende Mittel wie z.B. Butylbenzylphthalat, Dioctylphthalat u.a. Doch hat es sich als vorteilhaft erwiesen, beispielsweise die vorgenannten hydroxylgruppenhaltigen Polyester oder phosphor- und/oder halogenhaltige Verbindungen, wie z.B. die vorgenannten Flammschutzmittel zu verwenden, da diese zusätzlich die Flammwidrigkeit der PU-Schaumstoffe vergrößern.
   Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe wie z.B. silikatische Mineralien, beispielsweise Schichtsilikate, wie Antigorit, Serpentin, Hornblenden, Amphibole, Chrysotil, Zeolithe, Talkum; Metalloxide, wie z.B. Kaolin, Aluminiumoxide, Aluminiumsilikat, Titanoxide und Eisenoxide, Metallsalze wie z.B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 10 Gew.-%, bezogen auf das Gewicht des Isocyanat-Semiprepolymeren, einverleibt.
   Nähere Angaben über die oben genannten anderen üblichen Zusatzstoffe (F) sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Die erfindungsgemäßen, unter Druck stehende Isocyanat-Semiprepolymermischungen können nach bekannten Verfahren hergestellt werden.

Nach einer Verfahrensvariante kann beispielsweise durch Umsetzung der Polyhydroxylverbindungen (A) mit den Polyisocyanaten (B) in den erforderlichen Mengen in Gegenwart oder Abwesenheit eines Katalysators bei Temperaturen von 20 bis 120°C, vorzugsweise 40 bis 90°C das Isocyanat-Semiprepolymer hergestellt werden, das anschließend gegebenenfalls mit oberflächenaktiven Substanzen (D) und weiteren Zusatzstoffen (F) gemischt, in einen Druckbehälter eingebracht und in diesem mit dem Treibmittel (E) beaufschlagt werden kann. Nach einer anderen Verfahrensvariante kann die Isocyanat-Semipolymerherstellung in Gegenwart oder Abwesenheit von Katalysatoren sowie gegebenenfalls oberflächenaktiven Substanzen (D), anderen Zusatzstoffen (F) und in Gegenwart von Treibmitteln (E) in einem geeigneten Druckbehälter durchgeführt werden. Die erhaltene Isocyanat-Semiprepolymermischung kann danach in geeignete Behälter unterschiedlicher Größe, beispielsweise Aerosoldosen von z.B. 0,5 bis 5 Liter Inhalt oder Druckbehälter mit z.B. 50 bis 100 Liter Inhalt, wie sie für industrielle Bereiche üblich sind, abgefüllt werden. Nach einer bevorzugten Ausführungsform werden die Polyhydroxylverbindungen (A) mit den Katalysatoren (C), oberflächenaktiven Substanzen (D) sowie gegebenenfalls weiteren Zusatzstoffen (F) gemischt zu einer sogenannten Polyolkomponente. Die Polyolkomponente wird in einem geeigneten Behälter mit den organischen Polyisocyanaten gemischt und die erhaltene Mischung wird mit Hilfe einer Füllvorrichtung mit dem Treibmittel (E) beaufschlagt. Unter Durchmischung der Aufbaukomponenten wird die Isocyanat-Semiprepolymermischung gebildet.

Zur Herstellung der formstabilen PU-Schaumstoffe läßt man die unter Druck stehende Isocyanat-Semiprepolymermischung mit Hilfe einer geeigneten Vorrichtung, z.B. einem Ventil, auf Atmosphärendruck entspannen. Durch den Innendruck des Behälters wird die Isocyanat-Semiprepolymermischung herausgedrückt. Die Isocyanat-Semiprepolymermischung schäumt unter Atmosphärendruck auf und härtet durch Reaktion mit der Atmosphäre, insbesondere dem in der Atmosphäre enthaltenden Wasserdampf, rasch aus.

Die erfindungsgemäßen, unter Druck stehenden, Treibmittel enthaltenden Isocyanat-Semiprepolymermischungen können z.B. Verwendung finden zur Herstellung von Einkomponenten PU-Schaumstoffen, die beispielsweise zum Ausfüllen von Hohlräumen und Ritzen, als Dichtungsmittel, Isolationsmaterial sowie dem Fixieren und der Montage von Türen und Fenstern dienen können.

Die im wesentlichen dimensionsstabilen PU-Schaumstoffe besitzen in Abhängigkeit von den Treibmitteln und -mengen üblicherweise eine Dichte von 15 bis 40 g/Liter, vorzugsweise von 17 bis 30 g/ Liter.

### Beispiele

### Beispiel 1

Als Polyolkomponente verwendet wurde eine Mischung, die bestand aus:
- 2750: Gew.-Teilen Rizinusöl mit einer Hydroxylzahl von 165,
- 1200: Gew.-Teilen eines mit Glycerin gestarteten Polyoxypropylenpolyoxyethylen-polyols mit einer Hydroxylzahl von 42,
- 400: Gew.-Teilen Fettsäuremethylester,
- 450: Gew.-Teilen Hexanol,
- 120: Gew.-Teilen eines Polyoxyalkylenglykolpolysiloxancopolymeren als Schaumstabilisator und
- 45: Gew.-Teilen Di-(2-Morpholinoethyl) -ether

Die Polyolkomponente enthielt, bezogen auf das Gesamtgewicht der Hydroxylverbindungen, 10,23 Gew.-% Hexanol.

In eine 1 Liter Weißblechdose wurden
- 277 g: der Polyolkomponente und
- 402 g: einer Mischung aus Diphenylmethan-diisocyanaten und Polyphenyl-polymethylen-polyisocyanaten (Roh-MDI) mit einem Di-; phenylmethan-diisocyanatgehalt von 48 Gew.-%, bezogen auf das Gesamtgewicht der Mischung,
eingefüllt. Die Weißblechdose wurde mit einem Ventil gasdicht verschlossen und durch das Ventil mit Hilfe einer Gasfüllvorrichtung und unter intensivem Schütteln nacheinander in die Polyol-Roh-MDI-Mischung eingebracht:
- 14 g: Dimethylether,
- 42 g: eines Gemisches aus zirka 80 Gew.-% Butan und zirka 20 Gew.-% Propan und
- 83 g: Difluorethan.

Der Gehalt an Flüssiggastreibmittel in der Isocyanat-Semiprepolymermischung betrug 17 Gew.-%.

Zur Vervollständigung der Isocyanat-Semiprepolymerbildung wurde die Weißblechdose mit Inhalt 24 Stunden bei 50°C gelagert.

Das Ventil der Weißblechdose wurde mit einem Plastikring mit Außengewinde versehen. Mit Hilfe dieses Plastikringaußengewinde wurde die Weißblechdose auf eine Schaumpistole aufgeschraubt und die Austragsgeschwindigkeit (Austragmenge pro Zeiteinheit) als indirektes Qualitätskriterium für die Viskosität der Isocyanat-Semiprepolymermischung gemessen. Die Austragsgeschwindigkeit betrug 85 g/10 Sekunden.

### Vergleichsbeispiel I

Man verfuhr analog den Angaben des Beispiels 1, ohne jedoch Hexanol als Monoalkohol mitzuverwenden.

Die Austragsgeschwindigkeit der Isocyanat-Semiprepolymermischung betrug 45 g/10 Sekunden.

### Beispiel 2

Als Polyolkomponente verwendet wurde eine Mischung, die bestand aus:
- 160: Gew.-Teilen eines Poly- (ethylenglykoladipats) mit einer Hydroxylzahl von 56,
- 50: Gew.-Teilen eines mit Glycerin gestarteten Polyoxypropylenpolyols mit einer Hydroxylzahl von 400,
- 50: Gew.-Teilen eines mit Glycerin gestarteten Polyoxypropylenpolyoxyethylen-polyols mit einer Hydroxylzahl von 42,
- 50: Laurylalkohol,
- 20: Gew.-Teilen eines Polyoxyalkylenglykolpolysiloxancopolymeren als Schaumstabilisator,
- 5: Gew.-Teilen Di-(2-morpholinoethyl)ether und
- 160: Gew.-Teilen Trichlorpropylphosphat

Die Polyolkomponente enthielt, bezogen auf das Gesamtgewicht der Hydroxylverbindungen, 16,13 Gew.-% Laurylalkohol als Monoalkohol.
- 320 g: der Polyolkomponente und
- 415 g: des in Beispiel 1 beschriebenen Roh-MDI
wurden analog den Angaben des Beispiels 1 in eine 1 Liter Weißblechdose eingefüllt und die Mischung nacheinander mit
- 42 g: Dimethylether und
- 98 g: Tetrafluorethan
als Treibmittel beaufschlagt, wobei nach jeder Treibmittelzugabe der Doseninhalt intensiv geschüttelt wurde.

Der Gehalt an Flüssiggastreibmittel in der Isocyanat-Semiprepolymermischung betrug 16 Gew.-%.

Zur Vervollständigung der Isocyanat-Semiprepolymerbildung wurde die Weißblechdose mit Inhalt 24 Stunden bei 50°C gelagert und danach analog den Angaben des Beispiels 1 die Austragsgeschwindigkeit bestimmt, die 120 g/10 Sekunden betrug.

### Vergleichsbeispiel II

Man verfuhr analog den Angaben des Beispiels 2, ohne jedoch Laurylalkohol als Monoalkohol mitzuverwenden.

Die Austragsgeschwindigkeit dieser Isocyanat-Semiprepolymermischung betrug 68 g/10 Sekunden.

### Beispiel 3

Als Polyolkomponente verwendet wurde eine Mischung, die bestand aus:
- 700: Gew.-Teilen Rizinusöl mit einer Hydroxylzahl von 165,
- 900: Gew.-Teilen eines mit Glycerin gestarteten Polyoxypropylenpolyoxyethylen-polyols mit einer Hydroxylzahl von 42,
- 500: Gew.-Teilen eines Sojaöl-polyols mit einer Hydroxylzahl von 150,
- 700: Gew.-Teilen eines Fettsäureglyzerinesters mit einer Hydroxylzahl von 350,
- 450: Gew.-Teilen 4-Methyl-4-hydroxy-pentan-2-on,
- 120: Gew.-Teilen eines Polyoxyalkylenglykolpolysiloxancopolymeren als Schaumstabilisator,
- 45: Gew.-Teilen Di-(2-Morpholinoethyl) -ether,
- 1500: Gew.-Teilen Trichlorpropylphosphat und
- 20: Gew.-Teilen Ameisensäure

Die Polyolkomponente enthielt, bezogen auf das Gesamtgewicht der Hydroxylverbindungen, 13,85 Gew.-% 4-Methyl-4-hydroxy-pentan-2-on als β-Hydroxy-keton

In eine 1 Liter Weißblechdose wurden
- 305 g: der Polyolkomponente und
- 440 g: einer Mischung aus Diphenylmethan-diisocyanaten und Polyphenyl-polymethylen-polyisocyanaten (Roh-MDI) mit einem Diphenylmethan-diisocyanatgehalt von 48 Gew.-%, bezogen auf das Gesamtgewicht der Mischung,
eingefüllt. Die Weißblechdose wurde mit einem Ventil gasdicht verschlossen und durch das Ventil mit Hilfe einer Gasfüllvorrichtung und unter intensivem Schütteln nacheinander in die Polyol-Roh-MDI-Mischung eingebracht:
- 22 g: Dimethylether,
- 22 g: eines Gemisches aus zirka 80 Gew.-% Butan und zirka 20 Gew.-% Propan und
- 67 g: Tetrafluorethan.

Der Gehalt an Flüssiggastreibmittel in der Isocyanat-Semiprepolymermischung betrug 13 Gew.-%.

Zur Vervollständigung der Isocyanat-Semiprepolymerbildung wurde die Weißblechdose mit Inhalt 24 Stunden bei 50°C gelagert und danach analog den Angaben des Beispiels 1 die Austragsgeschwindigkeit bestimmt, die 95 g/10 Sekunden betrug.

### Vergleichsbeispiel III

Man verfuhr analog den Angaben des Beispiels 3, ohne jedoch das 4-Methyl-4-hydroxy-pentan-2-on mitzuverwenden.

Die Austragsgeschwindigkeit der Isocyanat-Semiprepolymermischung betrug 43 g/10 Sekunden.

### Beispiel 4

Als Polyolkomponente verwendet wurde eine Mischung, die bestand aus:
- 80: Gew.-Teilen eines mit Glycerin gestarteten Polyoxypropylenpolyols mit einer Hydroxylzahl von 400,
- 200: Gew.-Teilen eines Sojaölpolyols mit einer Hydroxylzahl von 150,
- 690: Gew.-Teilen eines mit Glycerin gestarteten Polyoxypropylenpolyoxyethylen-polyols mit einer Hydroxylzahl von 42,
- 190: Gew.-Teilen eines Fettsäureglyzerinesters mit einer Hydroxylzahl von 350,
- 200: Gew.-Teilen 4-Methyl-4-hydroxy-pentan-2-on,
- 60: Gew.-Teilen Stearylalkohol,
- 100: Gew.-Teilen Arachinsäure
- 50: Gew.-Teilen eines Polyoxyalkylenglykolpolysiloxancopolymeren als Schaumstabilisator,
- 20: Gew.-Teilen Di-(2-morpholinoethyl)ether und
- 600: Gew.-Teilen Trichlorpropylphosphat

Die Polyolkomponente enthielt zusammen, bezogen auf das Gesamtgewicht der Hydroxylverbindungen, 18,31 Gew.-% Stearylalkohol als Monoalkohol und 4-Methyl-4-hydroxy-pentan-2-on als β-Hydroxyketon.
- 325 g: der Polyolkomponente und
- 430 g: des in Beispiel 1 beschriebenen Roh-MDI
wurden analog den Angaben des Beispiels 1 in eine 1 Liter Weißblechdose eingefüllt und die Mischung nacheinander mit
- 22 g: Dimethylether,
- 22 g: eines Gemisches aus zirka 80 Gew.-% Butan und zirka 20 Gew.-% Propan und
- 67 g: Tetrafluorethan
als Treibmittel beaufschlagt.

Der Gehalt an Flüssiggastreibmittel in der Isocyanat-Semiprepolymermischung betrug 13 Gew.-%.

Zur Vervollständigung der Isocyanat-Semiprepolymerbildung wurde die Weißblechdose mit Inhalt 24 Stunden bei 50°C gelagert und danach analog den Angaben des Beispiels 1 die Austragsgeschwindigkeit bestimmt, die 85 g/10 Sekunden betrug.

### Vergleichsbeispiel IV

Man verfuhr analog den Angaben des Beispiels 4, ohne jedoch das 4-Methyl-4-hydroxy-pentan-2-on und den Stearylalkohol mitzuverwenden.

Die Austragsgeschwindigkeit dieser Isocyanat-Semiprepolymermischung betrug 38 g/10 Sekunden.

Bestimmung der Dimensionsstabilität der PU-Schaumstoffe, hergestellt aus den Isocyanat-Semiprepolymerischungen.

Unter Verwendung der nach den Beispielen 1 bis 4 in den Weißblechdosen hergestellten Isocyanat-Semiprepolymermischungen wurden jeweils 3 Prüfkörper hergestellt.

Zu Vergleichszwecken wurden die Polyolkomponenten der Vergleichsbeispiele I bis IV jeweils mit 8 Gew.-%, bezogen auf das Gewicht der Polyolkomponente, Methylethylketon, einem in der Patentliteratur beschriebenen üblichen Löse- und Verdünnungsmittel versetzt, um mit den erfindungsgemäßen Isocyanat-Semiprepolymermischungen vergleichbare Austragsgeschwindigkeiten zu erzielen.

Auf diese Weise modifizierte Isocyanat-Semiprepolymermischungen wurden analog den Angaben der Vergleichsbeispiele I bis IV in 1-Liter Weißblechdosen eingebracht und durch Entspannen in PU-Schaumstoffe übergeführt.

Das Formwerkzeug zur Bestimmung der Dimensionsstabilität bestand aus zwei beidseitig furnierten Spanplatten von 18 mm Dicke in den Abmessungen 250 x 115 mm, die durch seitlich angeordnete Distanzhölzer einen offenen Spalt von 20 mm aufwiesen.

Die Prüfkörper wurden hergestellt durch Ausschäumen des mit Wasser befeuchteten Spalts zwischen den Spanplatten. Nach dem Aushärten des PU-Schaumstoffs wurde der aus dem Formwerkzeug ausgetretene Schaumstoff abgeschnitten und die Distanzhölzer entfernt. Das arithmetische Mittel aus den Abständen der Spanplatten, gemessen an den Prüfkörperecken, ergibt den Ausgangswert der Messung der Dimensionsstabilität. Nach 14-tägiger Lagerung der Prüfkörper bei 40°C und 90 % relativer Luftfeuchtigkeit wurde die Messung wiederholt. Aus jeweils zwei Messungen pro Prüfkörper (vor bzw. nach der Lagerung) wurde die relative Änderung in % berechnet und gilt als Maß für die Dimensionsstabilität. Der Mittelwert aus an 3 Prüfkörpern gemessenen Dimensionsstabilitäten in % ergibt den in der nachfolgenden Tabelle genannten Meßwert. Prüfkörpern mit einem Meßwert kleiner als 10 % besitzen eine ausreichende Dimensionsstabilität.

Die Messung der Dimensionsstabilität nach der beschriebenen Methode an PU-Schaumstoffen, hergestellt aus den Isocyanat-Semiprepolymeren nach den Beispielen 1 bis 4 und den durch Zusatz von Methylethylketon (MEK) modifizierten Isocyanat-Semiprepolymeren nach den Vergleichsbeispielen I bis IV ergab die in der folgenden Tabelle zusammengefaßten Meßergebnisse

**Tabelle**

| Isocyanat-Semiprepolymermischung nach | Dimensionsstabilität [%] |
|---|---|
| Beispiel 1 | 3,8 |
| Vergleichsbeispiel I (modifiziert mit MEK) | 16,5 |
| Beispiel 2 | 4,3 |
| Vergleichsbeispiel II (modifiziert mit MEK) | 19,2 |
| Beispiel 3 | 2,8 |
| Vergleichsbeispiel III (modifiziert mit MEK) | 14,6 |
| Beispiel 4 | 3,2 |
| Vergleichsbeispiel IV (modifiziert mit MEK) | 15,8 |

## Patentansprüche

1. Unter Druck stehende, Treibmittel enthaltende Isocyanat-SemIprepolymermischung, erhältlich durch Umsetzung
A) mindestens einer Polyhydroxylverbindung mit
B) mindestens einem organischen Polyisocyanat
in einem Reaktionsgefäß in Gegenwart mindestens eines Treibmittels oder durch Beaufschlagen des treibmittelfrei gebildeten Isocyanat-Semiprepolymeren mit mindestens einem Treibmittel, dadurch gekennzeichnet, daß die Polyhydroxylverbindung (A) in Verbindung mit einem linearen, verzweigtkettigen oder cyclischen, gesättigten oder olefinisch ungesättigten Monoalkohol mit 1 bis 25 Kohlenstoffatomen (A1i) oder einem Hydroxyketon (A1ii) oder Mischungen davon im Gewichtsverhältnis (A):(A1i) und/oder (A1ii) von 20:1 bis 1,0:1 verwendet wird.

2. Unter Druck stehende, Treibmittel enthaltende Isocyanat-Semiprepolymermischungen nach Anspruch 1, dadurch gekennzeichnet, daß die Polyhydroxylverbindung (A) in Verbindung mit linearen gesättigten Monoalkoholen (A1i) mit 12 bis 20 Kohlenstoffatomen verwendet wird.

3. Unter Druck stehende, Treibmittel enthaltende Isocyanat-Semiprepolymermischung nach Anspruch 1, dadurch gekennzeichnet, daß die Polyhydroxylverbindung (A) in Verbindung mit β-Hydroxyketonen (A1ii) der Formel 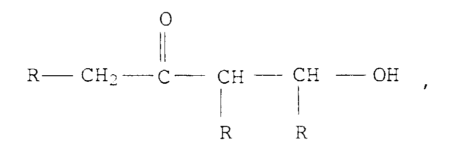 verwendet wird, in der R gleich oder verschieden ist, und ein Wasserstoffatom, einen Phenylrest, einen Alkylrest mit 1 bis 20 Kohlenstoffatomen, einen Phenylalkylrest mit 1 bis 14 Kohlenstoffatomen im Alkylenrest oder ein Halogenatom bedeutet.

4. Unter Druck stehende, Treibmittel enthaltende Isocyanat-Semiprepolymermischungen nach Anspruch 1, dadurch gekennzeichnet, daß die Polyhydroxylverbindung (A) in Verbindung mit 4-Methyl-4-hydroxy-pentan-2-on (A1ii) verwendet wird.

5. Unter Druck stehende, Treibmittel enthaltende Isocyanat-Semiprepolymermischung nach Anspruch 1, erhältlich durch Umsetzung
A) mindestens einer Polyhydroxylverbindung mit
B) mindestens einem organischen Polyisocyanat in Gegenwart von
C) Katalysatoren,
D) oberflächenaktiven Substanzen sowie
E) gegebenenfalls weiteren Zusatzstoffen
in einem Reaktionsgefäß in Gegenwart eines Treibmittels oder durch Beaufschlagen des treibmittelfrei gebildeten Isocyanat-Semiprepolymeren mit einem Treibmittel, dadurch gekennzeichnet, daß die Polyhydroxylverbindung (A) in Verbindung mit einem linearen, verzweigtkettigen oder cyclischen, gesättigten oder olefinisch ungesättigten Monoalkohol mit 1 bis 25 Kohlenstoffatomen (A1i) oder einem Hydroxyketon (A1ii) oder Mischungen davon im Gewichtsverhältnis (A):(A1i) und/oder (A1ii) von 20 : 1 bis 1,0 : 1 verwendet wird.

6. Unter Druck stehende, Treibmittel enthaltende Isocyanat-Semiprepolymermischung nach Anspruch 5, dadurch gekennzeichnet, daß man als Polyhydroxylverbindung (A) hydroxylgruppenhaltige Polyester (A2) mit einem Molekulargewicht von mindestens 300 verwendet.

7. Unter Druck stehende, Treibmittel enthaltende Isocyanat-semiprepolymermischungen nach Anspruch 6, dadurch gekennzeichnet,
daß man als Polyhydroxylverbindung (A) hydroxylgruppenhaltige Polyester (A2) mit einem Molekulargewicht von mindestens 300 verwendet, ausgewählt aus der Gruppe der
Polyester-polyole, hergestellt durch Polykondensation von Dicarbonsäuren und/oder Dicarbonsäurederivaten und zwei- und/oder dreiwertigen Alkoholen,
der natürlichen Öle,
der modifizierten natürlichen Öle, hergestellt durch Addition von ein- und/oder mehrwertige Alkoholen an epoxidierte natürliche Öle und
der dimeren Fettsäureester.

8. Unter Druck stehende, Treibmittel enthaltende Isocyanat-Semiprepolymermischungen nach Anspruch 7, dadurch gekennzeichnet, daß man als Polyhydroxylverbindungen (A) Mischungen verwendet, die enthalten
A1) einen linearen, verzweigtkettigen oder cyclischen, gesättigten oder olefinisch ungesättigten Monoalkohol mit 1 bis 25 Kohlenstoffatomen (A1i) oder ein Hydroxyketon (A1ii) oder eine Mischung davon,
A2) einen hydroxylgruppenhaltigen Polyester mit einem Molekulargewicht von mindestens 300 und gegebenenfalls
A3) Polyoxyalkylen-polyole mit einer Funktionalität von 2 bis 8 und einem Molekulargewicht von mindestens 300.

9. Unter Druck stehende, Treibmittel enthaltende Isocyanat-Semiprepolymermischungen nach einem der Ansprüche 1 bis 8, dadurch gekennzeichnet, daß als organisches Polyisocyanat (B) eine Mischung aus Diphenylmethan-diisocyanat und Polyphenylpolymethylen-polyisocyanaten verwendet wird.

10. Unter Druck stehende, Treibmittel enthaltende Isocyanat-Semiprepolymermischungen nach einem der Ansprüche 1 bis 9, dadurch gekennzeichnet, daß die Isocyanat-Semiprepolymeren einen NCO-Gehalt von 5 bis 25 Gew.-% besitzen.

11. Verwendung der in einem Druckbehälter unter Druck stehenden, Treibmittel enthaltenden Isocyanat-Semiprepolymermischungen nach einem der Ansprüche 1 bis 10 zur Herstellung von Einkomponenten-Polyurethan-Schaumstoffen durch Entspannen des Druckbehälterinhalts.

12. Verfahren zur Herstellung von formstabilen Polyurethan-Schaumstoffen durch Entspannen und Aushärten lassen mit der Atmosphäre, einer lagerstabilen, unter Druck stehenden, Treibmittel enthaltenden Isocyanat-Semiprepolymermischung auf Basis von Polyhydroxylverbindungen (A) und organischen Polyisocyanaten (B), dadurch gekennzeichnet, daß zur Herstellung des Isocyanat-Semiprepolymeren die Polyhydroxylverbindungen (A) in Verbindung mit einem linearen, verzweigtkettigen oder cyclischen, gesättigten oder olefinisch ungesättigten Monoalkohol mit 1 bis 25 Kohlenstoffatomen (A1i) oder einem Hydroxyketon (A1ii) oder einer Mischung davon im Gewichtsverhältnis (A) : (A1i) und/oder (A1ii) von 20 : 1 bis 1,0 : 1 verwendet werden.

## Claims

1. A pressurized, blowing-agent-containing isocyanate semiprepolymer mixture obtainable by reacting
A) at least one polyhydroxyl compound with
B) at least one organic polyisocyanate
in a reactor in the presence of at least one blowing agent or by treating the isocyanate semiprepolymer formed in the absence of blowing agent with at least one blowing agent, wherein the polyhydroxyl compound (A) is used in combination with a linear, branched or cyclic, saturated or olefinically unsaturated monoalcohol having 1 to 25 carbon atoms (A1i) or a hydroxyketone (A1ii), or a mixture thereof, in a weight ratio (A):(A1i) and/or (A1ii) of from 20:1 to 1.0:1.

2. A pressurized, blowing-agent-containing isocyanate semiprepolymer mixture as claimed in claim 1, wherein the polyhydroxyl compound (A) is used in combination with a linear saturated monoalcohol (A1i) having 12 to 20 carbon atoms.

3. A pressurized, blowing-agent-containing isocyanate semiprepolymer mixture as claimed in claim 1, wherein the polyhydroxyl compound (A) is used in combination with a β-hydroxyketone (A1ii) of the formula 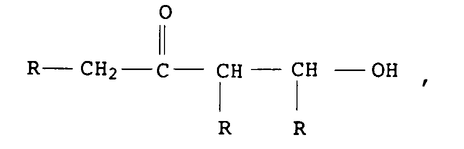 where the radicals R are identical or different and are hydrogen, phenyl, alkyl having 1 to 20 carbon atoms, phenylalkyl having 1 to 14 carbon atoms in the alkylene radical or halogen.

4. A pressurized, blowing-agent-containing isocyanate semiprepolymer mixture as claimed in claim 1, wherein the polyhydroxyl compound (A) is used in combination with 4-methyl-4-hydroxypentan-2-one (A1ii).

5. A pressurized, blowing-agent-containing isocyanate semiprepolymer mixture as claimed in claim 1, obtainable by reacting
A) at least one polyhydroxyl compound with
B) at least one organic polyisocyanate in the presence of
C) catalysts,
D) surfactants and
E) if desired further additives
in a reactor in the presence of a blowing agent or by treating the isocyanate semiprepolymer formed in the absence of blowing agent with a blowing agent, wherein the polyhydroxyl compound (A) is used in combination with a linear, branched or cyclic, saturated or olefinically unsaturated monoalcohol having 1 to 25 carbon atoms (A1i) or a hydroxyketone (A1ii), or a mixture thereof, in a weight ratio (A):(A1i) and/or (A1ii) of from 20:1 to 1.0:1.

6. A pressurized, blowing-agent-containing isocyanate semiprepolymer mixture as claimed in claim 5, wherein the polyhydroxyl compound (A) is a hydroxyl-containing polyester (A2) having a molecular weight of at least 300.

7. A pressurized, blowing-agent-containing isocyanate semiprepolymer mixture as claimed in claim 6, wherein the polyhydroxyl compound (A) is a hydroxyl-containing polyester (A2) having a molecular weight of at least 300, selected from the group consisting of
polyester-polyols prepared by polycondensation of dicarboxylic acids and/or dicarboxylic acid derivatives and dihydric and/or trihydric alcohols,
natural oils,
modified natural oils prepared by the addition reaction of monohydric and/or polyhydric alcohols with epoxidized natural oils, and
dimeric fatty acid esters.

8. A pressurized, blowing-agent-containing isocyanate semiprepolymer mixture as claimed in claim 7, wherein the polyhydroxyl compound (A) is a mixture comprising
A1) a linear, branched or cyclic, saturated or olefinically unsaturated monoalcohol having 1 to 25 carbon atoms (A1i) or a hydroxyketone (A1ii), or a mixture thereof,
A2) a hydroxyl-containing polyester having a molecular weight of at least 300, and, if desired,
A3) a polyoxyalkylene-polyol having a functionality of from 2 to 8 and a molecular weight of at least 300.

9. A pressurized, blowing-agent-containing isocyanate semiprepolymer mixture as claimed in any of claims 1 to 8, wherein the organic polyisocyanate (B) is a mixture of diphenylmethane diisocyanate and polyphenyl-polymethylene polyisocyanates.

10. A pressurized, blowing-agent-containing isocyanate semiprepolymer mixture as claimed in any of claims 1 to 9, wherein the isocyanate semiprepolymers have an NCO content of from 5 to 25% by weight.

11. The use of a pressurized, blowing-agent-containing isocyanate semiprepolymer mixture as claimed in any of claims 1 to 10 in a pressure container for the production of one-component polyurethane foams by depressurizing the pressure container contents.

12. A process for the production of dimensionally stable polyurethane foams by depressurizing and allowing to cure in the atmosphere a storage-stable, pressurized, blowing-agent-containing isocyanate semiprepolymer mixture based on a polyhydroxyl compound (A) and an organic polyisocyanate (B), which comprises using the polyhydroxyl compound (A) in combination with a linear, branched or cyclic, saturated or olefinically unsaturated monoalcohol having 1 to 25 carbon atoms (A1i) or a hydroxyketone (A1ii), or a mixture thereof, in a weight ratio (A):(A1i) and/or (A1ii) of from 20:1 to 1.0:1 to prepare the isocyanate semiprepolymer.

## Revendications

1. Mélange semi-prépolymère d'isocyanate sous pression, contenant un agent mousant, pouvant être obtenu par réaction
A) d'au moins un composé polyhydroxylé avec
B) au moins un polyisocyanate organique
dans un récipient de réaction en présence d'au moins un agent mousant ou par mise en contact du semi-prépolymère d'isocyanate formé en absence d'agent mousant avec au moins un agent mousant, caractérisé en ce que le composé polyhydroxylé (A) est utilisé en combinaison avec un mono-alcool saturé ou oléfiniquement insaturé, linéaire, ramifié ou cyclique avec 1 à 25 atomes de carbone (A1i) ou une hydroxycétone (A1ii) ou des mélanges de ceux-ci en un rapport pondéral (A) : (A1i) et/ou (A1ii) de 20 : 1 à 1,0 : 1.

2. Mélanges semi-prépolymères d'isocyanate sous pression, contenant un agent mousant, selon la revendication 1, caractérisés en ce que le composé polyhydroxylé (A) est utilisé en combinaison avec des mono-alcools (A1i) saturés et linéaires avec 12 à 20 atomes de carbone.

3. Mélange semi-prépolymère d'isocyanate sous pression, contenant un agent mousant, selon la revendication 1, caractérisé en ce que le composé polyhydroxylé (A) est utilisé en combinaison avec des β-hydroxycétones (A1ii) répondant à la formule 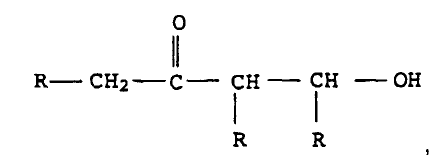 dans laquelle les groupes R sont identiques ou différents et représentent un atome d'hydrogène, un résidu phényle, un résidu alkyle avec 1 à 20 atomes de carbone, un résidu phénylalkyle avec 1 à 14 atomes de carbone dans le résidu alkylène ou un atome d'halogène.

4. Mélanges semi-prépolymères d'isocyanate sous pression, contenant un agent mousant, selon la revendication 1, caractérisés en ce que le composé polyhydroxylé (A) est utilisé en combinaison avec la 4-méthyl-4-hydroxy-pentan-2-one (A1ii).

5. Mélange semi-prépolymère d'isocyanate sous pression, contenant un agent mousant, selon la revendication 1, pouvant être obtenu par réaction
A) d'au moins un composé polyhydroxylé avec
B) au moins un polyisocyanate organique en présence
C) de catalyseurs,
D) de substances tensioactives, de même que
E) éventuellement d'autres additifs
dans un récipient de réaction en présence d'un agent mousant ou par mise en contact du semi-prépolymère d'isocyanate formé en absence d'agent mousant avec un agent mousant, caractérisé en ce que le composé polyhydroxylé (A) est utilisé en combinaison avec un mono-alcool saturé ou oléfiniquement insaturé, linéaire, ramifié ou cyclique avec 1 à 25 atomes de carbone (A1i) ou une hydroxycétone (A1ii) ou des mélanges de ceux-ci en un rapport pondéral (A) : (A1i) et/ou (A1ii) de 20 : 1 à 1,0 : 1.

6. Mélange semi-prépolymère d'isocyanate sous pression, contenant un agent mousant, selon la revendication 5, caractérisé en ce qu'on utilise à titre de composé polyhydroxylé (A) des polyesters hydroxylés (A2) avec un poids moléculaire d'au moins 300.

7. Mélanges semi-prépolymères d'isocyanate sous pression, contenant un agent mousant, selon la revendication 6, caractérisés en ce qu'on utilise à titre de composé polyhydroxylé (A) des polyesters hydroxylés (A2) avec
un poids moléculaire d'au moins 300, choisis dans le groupe
des polyester-polyols préparés par polycondensation d'acides dicarboxyliques et/ou de dérivés d'acides dicarboxyliques et d'alcools di- et/ou trivalents,
des huiles naturelles,
des huiles naturelles modifiées préparées par addition d'alcools mono- et/ou polyvalents sur des huiles naturelles époxydées et
des esters d'acides gras dimères.

8. Mélanges semi-prépolymères d'isocyanate sous pression, contenant un agent mousant, selon la revendication 6, caractérisés en ce qu'on utilise à titre de composés polyhydroxylés (A) des mélanges qui contiennent
A1) un mono-alcool saturé ou oléfiniquement insaturé, linéaire, ramifié ou cyclique avec 1 à 25 atomes de carbone (A1i) ou une hydroxycétone (A1ii) ou un mélange de ceux-ci
A2) un polyester hydroxylé avec un poids moléculaire d'au moins 300 et éventuellement
A3) des polyoxyalkylène-polyols avec une fonctionnalité de 2 à 8 et un poids moléculaire d'au moins 300.

9. Mélanges semi-prépolymères d'isocyanate sous pression, contenant un agent mousant, selon l'une des revendications 1 à 8, caractérisés en ce qu'on utilise à titre de polyisocyanate organique (B) un mélange constitué de diphénylméthane-diisocyanate et de polyphényl-polyméthylène-polyisocyanates.

10. Mélanges semi-prépolymères d'isocyanate sous pression, contenant un agent mousant, selon l'une des revendications 1 à 9, caractérisés en ce que les semi-prépolymères d'isocyanate présentent une teneur en NCO de 5 à 25 % en poids.

11. Utilisation des mélanges semi-prépolymères d'isocyanate sous pression, contenant un agent mousant, dans un récipient sous pression, selon l'une des revendications 1 à 10, pour la préparation de mousses de polyuréthane monocomposantes par détente du contenu du récipient sous pression.

12. Procédé de préparation de mousses de polyuréthane indéformables par détente et durcissement à l'atmosphère libre d'un mélange semi-prépolymère d'isocyanate sous pression, contenant un agent mousant et stable au stockage, à base de composés polyhydroxylés (A) et de polyisocyanates organiques (B), caractérisé en ce que pour la préparation du semi-prépolymère d'isocyanate les composés polyhydroxylés (A) sont utilisés en combinaison avec un mono-alcool saturé ou oléfiniquement insaturé, linéaire, ramifié ou cyclique avec 1 à 25 atomes de carbone (A1i) ou une hydroxycétone (A1ii) ou un mélange de ceux-ci en un rapport pondéral (A) : (A1i) et/ou (A1ii) de 20 : 1 à 1,0 :1.
